# EUROPEAN PATENT APPLICATION

(11) **EP 4 375 015 A1**
(43) Date of publication of application: **29.05.2024**
(21) Application number: 22209472.4
(22) Date of filing: 24.11.2022
(51) Int. Cl.: B25B 21/00, B25F 3/00, B25F 5/02

(54) **DEVICE FOR SUPPORTING BITS FOR A TOOL**

(71) Applicant: Vargas Munoz, Manuel Dimas, 6988 Ponte Tresa (CH)
(72) Inventor: Vargas Munoz, Manuel Dimas, 6988 Ponte Tresa (CH)
(74) Representative: M. Zardi & Co S.A.

(57) **Abstract**

A loader/selector device (100) for loading/selecting bits (88) for a working tool of the type comprising a chuck (50), for example a drill, is described, the device (100) comprising: a support structure (18) comprising a mount (5) integral with the support structure (18) and intended to be gripped by the chuck (50) in a proximal position close to the chuck (50); at least one proximal seat (6a) for at least one bit (88) for supporting the at least one bit in a position retracted inside the support structure (18); a distal seat (17) for another bit (18) in a distal position spaced from the chuck (50) for supporting the other bit with a working surface projecting from the support structure (18); selection means designed to displace the at least one bit (88) from the proximal seat (6a) to the distal seat (17) and the other bit from the distal seat (17) to the proximal seat (6a).

## Description

### Filed of application

The present invention relates to a device for supporting a bit for a machine tool, for example a device for supporting a cutting or screwing bit for an electric drill.

The present invention also relates to a method for using a device for supporting a bit for a machine tool, of the aforementioned type.

### Prior art

Devices for supporting a bit for machine tools such as electric drills are known. The most well-known and widely used support device is the chuck. The chuck is mounted on the drill so as to grip and rotationally drive a bit, or a tool, such as a cutting bit or a screwing bit. The electric drill is just one example of a machine tool with chuck; other examples are lathes, milling machines, grinders, sharpening machines, axial polishing machines, etc.

The bits are often sold in a container together with the machine tool, thus providing the operator with a wide selection of tools of varying sizes and functions, to be mounted on the chuck depending on the work to be carried out.

Self-centring chucks with three, four or six gripping jaws are known. On portable drills, for example, the chucks may grip helical bits with a diameter ranging from 1 to 13 millimetres or screwing bits of varying diameters. The bits may have a mounting portion or shank with a hexagonal cross-section which facilitates gripping in the chuck.

In particular battery-operated electric drills (or other machine tools) which are packaged together with multiple bits are very popular owing to their transportability, allowing operators to carry around with them everything which is needed to perform a particular job.

However, the known devices have a drawback which arises especially when the operator is working in cramped or uncomfortable conditions, for example standing on the steps of a ladder, where there is not enough space to place the container with the bits. In such a situation the operator mounts a first bit on the chuck and keeps another bit within easy reach, for example in a pocket, while leaving the container on the ground. When the operation with the first tool has been completed, the first tool is removed from the chuck and the other bit is mounted in place of it. This operation, when carried out at the top of a ladder, may be dangerous and is any case awkward and somewhat difficult to perform. It often happens that a third tool, which is not within easy reach, is required. In this case, the operator must climb down the ladder, select the third tool from the container and climb back up the ladder.

The technical problem underlying the present invention is to devise a device for supporting a bit for a machine tool, in particular a device for supporting a cutting bit or screwing bit, which simplifies the operator's activity, especially in conditions where the working space is difficult to access or cramped, thereby overcoming the limitations and drawbacks which currently affect the support devices of the prior art.

### Summary of the invention

A support device for a bit of a machine tool of the type comprising a chuck according to the present invention is claimed in claim 1.

Claims 2 to 15 are preferred embodiments of the support device for the bit of the machine tool according to the present invention.

Further characteristic features and advantages of the support device according to the present invention and of a method of use thereof are described below with reference to the attached figures, provided only by way of a non-limiting example of the scope of protection of the present invention.

### Brief description of the attached figures

Figure 1 shows a perspective view of a support device comprising a loader/selector for a machine tool bit, with the device mounted on the chuck of the machine tool.
Figure 2 is a perspective view of the support device shown in Figure 1, with part detached from the chuck.
Figure 3 is another perspective view of the support device according to Figure 1, with part detached from the chuck and rotated about the axis X1 compared to the view shown in Figure 2.
Figure 4 is another perspective view of the support device according to Figure 1, with part detached from the chuck and with a cutting bit inserted.
Figure 5 is another perspective view of the support device according to Figure 1, with part detached from the chuck and with a screwing bit inserted.
Figure 6 is a perspective view of a circular crown-piece of the loader/selector of the support device according to Figure 1.
Figure 7 is a perspective view of a cover of the circular crown-piece of the loader/selector of Figures 6, with parts partially detached.
Figure 8 is an exploded perspective view of the cover and the circular crown-piece of Figure 7 and of a body of the loader/selector according to Figure 1.
Figure 9 is another perspective view of the support device according to in Figure 1.

### Detailed description of the invention

With reference to the attached figures, a support device for a bit of a machine tool of the type comprising a chuck 50 is described. The machine tool is for example an electric drill. The electric drill is only one non-limiting example of a machine tool on which the support device of the present invention can be fitted. Other examples are lathes, milling machines, grinders, sharpening machines, axial polishing machines, etc.

The bit is for example a cutting bit or a screwing bit. Multiple bits, of varying sizes and with different features, which are chosen depending on the work to be done, are often sold together with the machine tool inside a container. The bits may have a mounting portion or shank with a hexagonal cross-section which facilitates gripping. These bits are also called "insert bits".

The support device according to the present invention comprises a loader/selector 100 intended to be arranged between the chuck 50 of the machine tool and the bit (tool) 88.

The bit, for example the insert bit 88, is supported at one end of the loader/selector 100 and not directly by the chuck 50. The chuck 50 instead supports the loader/selector 100. The chuck 50 is clamped onto a mount 5 of the loader/selector 100. The mount 5 is located at one end of the loader/selector 100. The mount 5 is located close to the chuck and extends along an axis X1. The axis X1 corresponds to an axis X2 of the bit 88 mounted on the loader/selector 100, in a distal position spaced from the chuck 50, at the front end of the support device. The chuck 50 rotationally drives the loader/selector 100 and therefore the bit 88. When joined together and duly tightened, the chuck 50, support device (loader/selector 100) and bit 88 are locked together and intended to rotate at the same angular speed.

The loader/selector 100 is intended to support a bit 88 at its front end, in an operating position, and at least one bit 88 in a non-operating position, retracted from the front end. In the retracted position, the bit is hidden. A support structure 18 of the loader/selector 100 encloses the bit 88 in the retracted position so that it does not pose any danger for the operator.

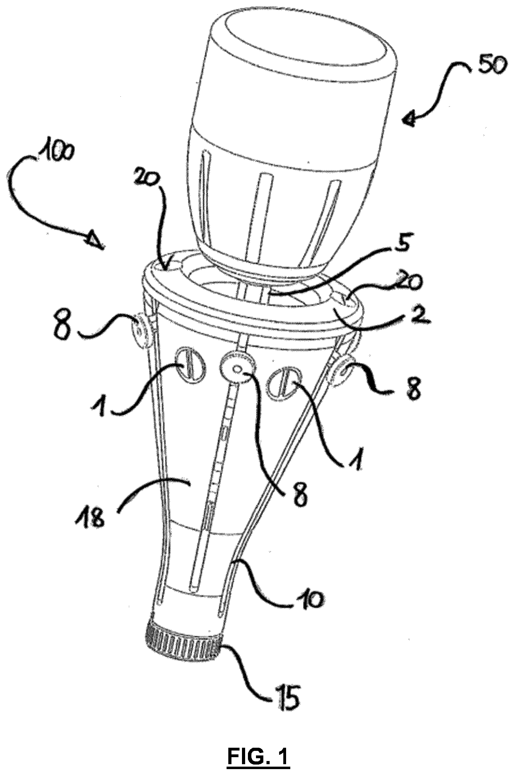

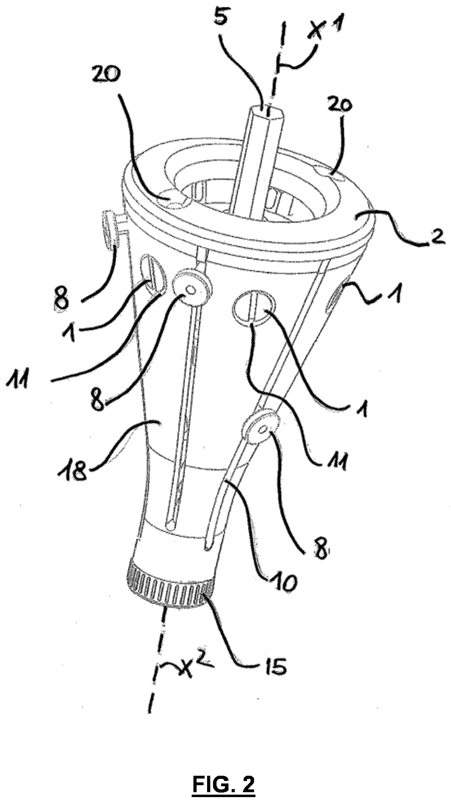

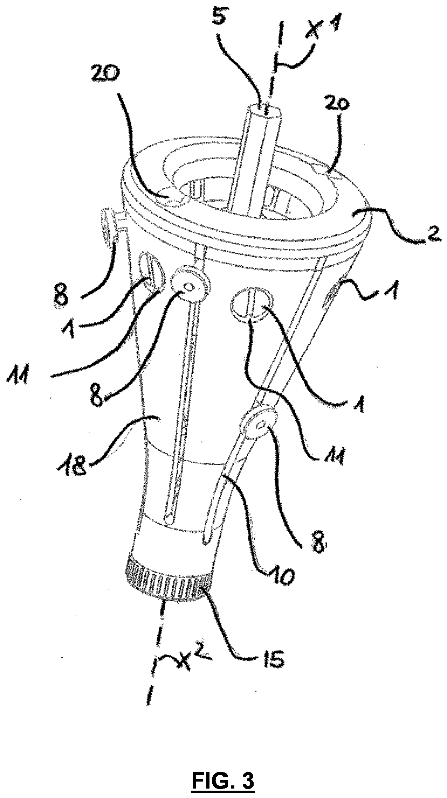

Firstly an embodiment in which there only two bits 88 is described - one bit in an operating position in the support device and one bit in a position retracted within the support device. This embodiment is not shown in Figures 1-9. However, in the continuation of the description, reference is in any case made to the reference numbers shown in Figures 1-9 as a reading aid, since the person skilled on the art will understand, even if the embodiment in Figures 1-9 relates to a loader/selector provided with multiple seats for a plurality of bits, that other variants may be envisaged on the basis of the present disclosure and Figures 1-9, for example variants with only two seats for two respective bits. Furthermore, it is quite possible for the embodiment with multiple seats to be used to support only one bit in the retracted position and one bit in the operating position.

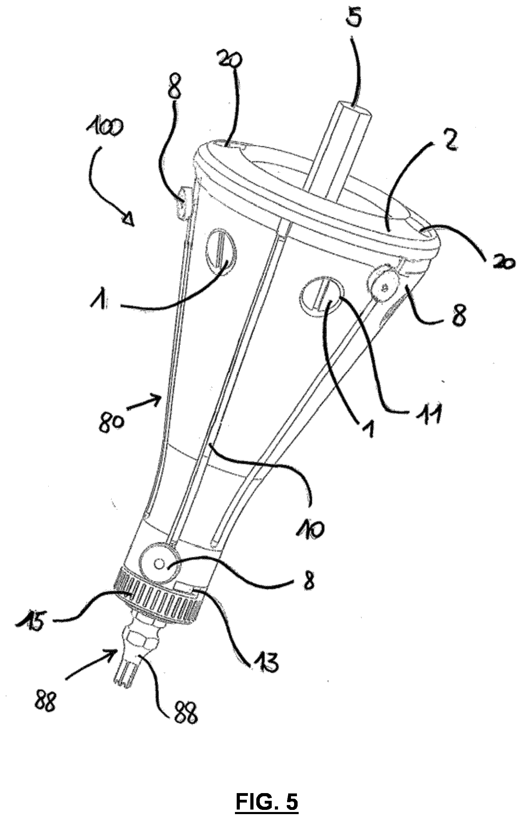

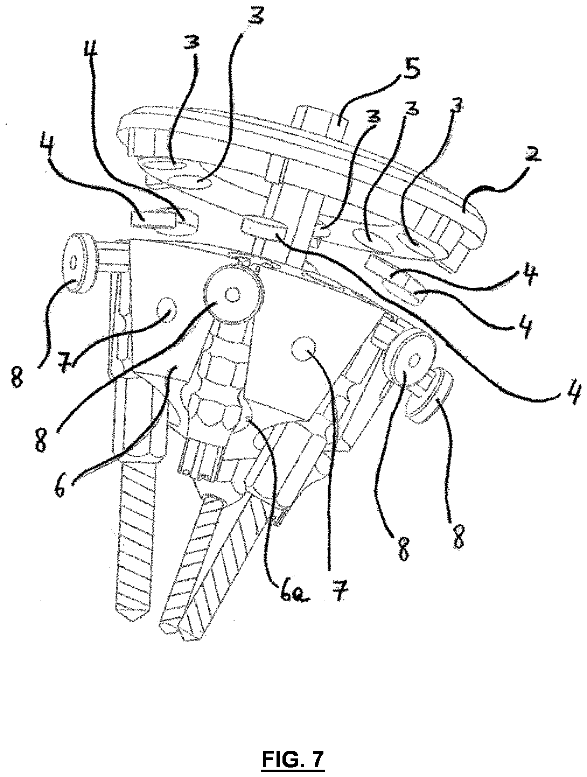

The support structure 18 comprises the mount 5 integral therewith and intended to be gripped by the chuck 50 in the proximal position close to the chuck 50. The support structure 18 comprises a proximal seat 6a (Fig. 7) for the bit 88, for supporting said bit in the position retracted inside the support structure 18. The proximal seat 6a and the retracted bit 8 are protected by a body 80 (Fig. 5) of the support structure 18 so that during the rotational movement they do not pose any danger for the operator (the operator may come into contact with the surface of the body 80, but not with the bit 88 in the retracted position).

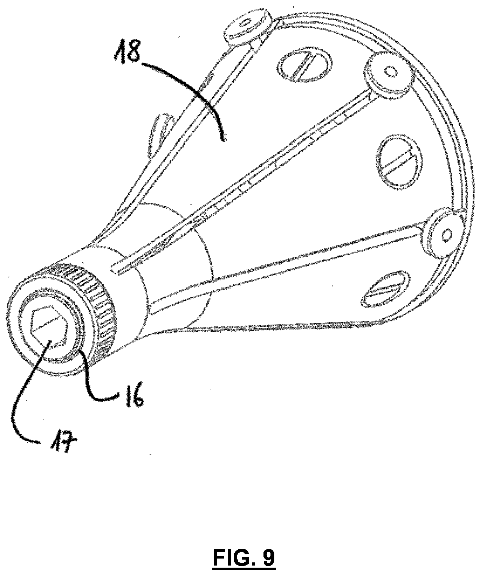

The support structure 18 also comprises a distal seat 17 (Fig. 9) for another bit 88. The distal seat 17 is situated in a distal position spaced from the chuck 50 and is intended to support the other bit 88 in the operating position. Said other bit 88 therefore has a working surface (cutting tip, screwing tip) projecting from the support structure 18.

The loader/selector 100, in this example, is configured to load a bit in the retracted position and to position selectively another bit in the operating position.

Selection means are provided for displacing the bit 88, for example a screwing bit, from the proximal seat 6a to the distal seat 17 and for displacing the other bit, for example a cutting bit, from the distal seat 17 to the proximal seat 6a. This displacement is performed by the operator when the operation with the cutting bit has been completed and the screwing bit is required.

The operation may be performed manually, as described in the description below. However, it is quite possible that selection of the bit to be used may be performed electronically; in this case, it is envisaged that the support device comprises a controller and bit displacement means which are electrically powered, for example by means of the same battery which powers the machine tool.

According to one embodiment, the selection means switch over the positions of the bit 88 in the retracted position and of the other bit 88 in the operating position. The switch-over operation is performed by operating a single operating device, for example a slider, which by means of a single displacement, for example from position A to position B, inverts the position of the two bits 88. Conversely, operation of the operating device from position B to position A inverts again the position of the two bits 88. If electronically controlled, switching may be performed by means of a switch.

In one mode of use, the support device is used without a chuck, for example so as to provide a manual screwdriver (or other manual tool) with interchangeable bits. The support device may have a form obviously different from that shown in Figures 1-9 and therefore also the form of a screwdriver which conceals inside the handle a retracted bit with a star head and which exposes a bit with a flat head. The handle may be provided with selection means which switch between the flat-head bit and the star head bit. Similarly, multiple manual tools, in particular the tools which are commonly used by a carpenter, may be designed on the basis of the present disclosure, so as to load one or more bits in the retracted position and to select one bit in the operating position.

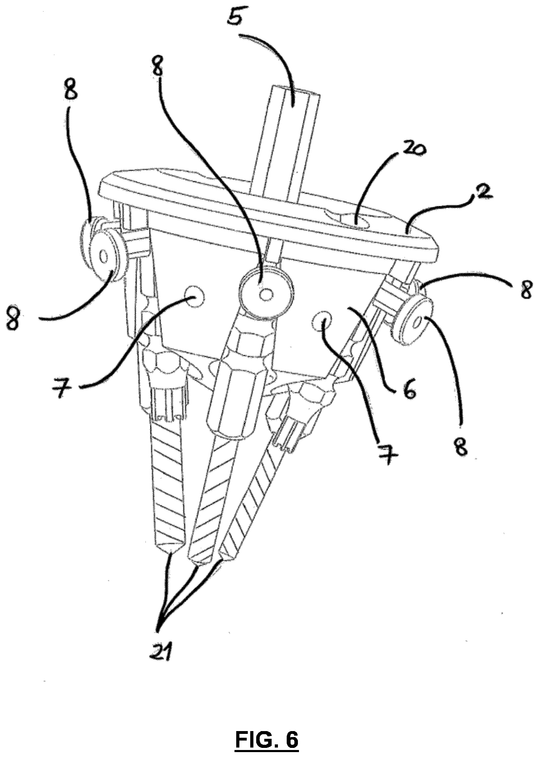

The example of embodiment provided with reference to Figures 1-9 relates specifically to a device for supporting multiple bits in the retracted position and is shown in relation to a chuck 50 of a machine tool. More specifically, multiple proximal seats 6a for multiple bits 88 in the retracted position in the support structure 18 are illustrated in the detail of Figure 6.

The selection means 8 are sliders which are designed to displace selectively the bit 88 from the distal seat 17 (operating position) into the proximal seat 6a (retracted position) and a desired bit chosen from among the multiple bits 88 from the proximal position 6a (retracted position) into the distal position 17. In the example illustrated, these displacements are performed in sequence, namely first the operating position is freed with the displacement of a slider 8 and then the operating position is occupied again with the displacement of another slider 8. As indicated above, the displacements may be controlled electronically, in which case a luminous or LED screen interface, together with respective selection instruments (of the pushbutton or touch type to mention a few examples), for selecting the bit to be moved into the operating position, could be provided.

The bit 88 may be visible through the body 80 of the support structure 18, which may be transparent, thus simplifying the selection of the desired bit 88.

In one embodiment, the multiple proximal seats 6a are arranged in a circular crown-piece 6 of the support structure 18. The crown-piece 6 is intended preferably to remain in the proximal position close to the chuck 50. In fact, since it is a structure designed to support multiple bits, the circular crown-piece 6 has a size bigger than a front end of the support device which supports a single bit, which must be small so as not to interfere with the bit in the operating position, during displacement, in particular rotation. Therefore, the support structure 18 may have a conical or tapered form, with a smaller diameter towards the front end and largest diameter close to the mount 5.

In particular, the support structure 18 comprises the covering body 80. The body 80 covers the circular crown-piece 6 and extends, tapering, towards the distal seat 17. In one embodiment, the body 80 forms guides for the sliders. Each guide 18 extends from the circular crown-piece 6 towards the distal seat 17 so as to guide one of the bits from the proximal seat 6a to the distal seat 17, and vice versa. Each guide 80 is formed for example by a pair of adjacent surfaces of the body 80; the surfaces are spaced by a predefined amount, equivalent to the length of the guide 10, and are joined together at least close to the distal part, where the front end of the support device is situated.

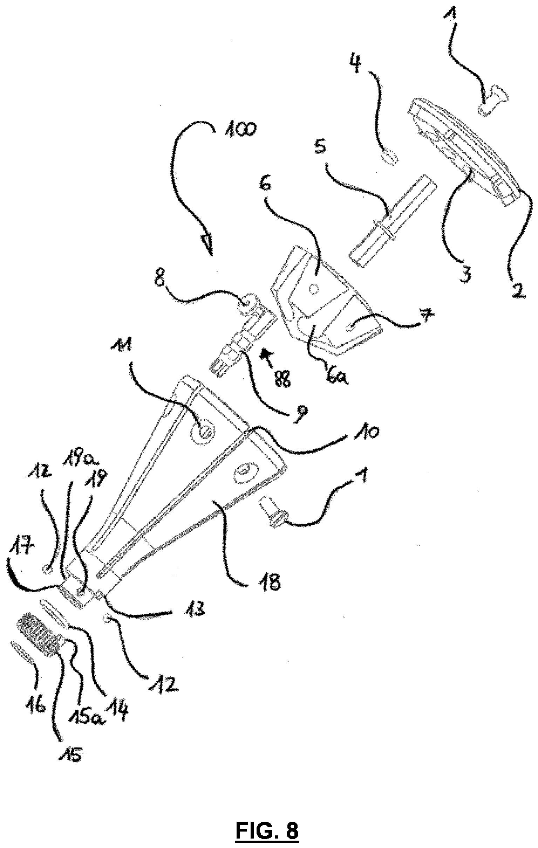

With reference to Figure 6, it can be noted that multiple bits 88 are inserted in multiple seats 6a of the circular crown-piece 6. Each bit 88 comprises the slider 8 sliding inside a guide 10 of the body 8 of the support structure 18. The slider 8 has a metallic part and the circular crown-piece 6 is associated with a permanent magnet 4 which retains the multiple bits 88 inside the multiple seats 6a. Such a configuration is shown in Figure 8. The slider 8 has a substantially L-shaped form, namely consisting of a base section and a section perpendicular to the base; the slider 8 is at the end of the base section, the mounting portion, for example the hexagonal cross-section mounting portion of the bit is at the bottom end of the perpendicular section, and the tool, for example a screwing bit, is at the end of the perpendicular section. The hexagonal cross-section mounting portion of the bit is at least partly inserted inside the seat 6a of the circular crown-piece, with the slider 8 projecting therefrom. The seat 6a is at least partly open at a base of the circular crown-piece 6 directed, during use, towards the chuck 50. The magnet 4 is operationally associated with the hexagonal cross-section mounting portion of the bit at the opening of the seat 6a and the hexagonal cross-section mounting portion is metallic and therefore attracted by the magnet 4.

Other releasable fixing means, other than a magnet, may be provided, these having the same function of locking the mounting portion with hexagonal cross-section, or hexagonal shank, or other cross-section of the bit 88 inside the seat 6a in the distal position spaced from the chuck 50. Preferably, a width of the multiple seats 6a in the proximal part of the circular crown-piece 6 corresponds to a thickness of the shank. Even more preferably, the shank snap-engages inside the seat 6a.

The Applicant has contemplated the possibility of the support structure being able to house bits of varying sizes. This possibility involves providing different-size guides and a particular form of the circular crown-piece. Again with reference to Figure 6 it is possible to note that multiple bits 88 comprise a hexagonal shank. The bits have two different lengths. The cutting ends have one length and the tool mounting ends have a length smaller than the length of the cutting ends. The example is provided only by way of example, and other forms and sizes may be considered.

Each seat for the multiple bits 88 comprises a surface for supporting at least part of the shank. The surface extends from a proximal side to a distal side of the circular crown-piece 6, converging towards the centre of the distal side so that the part of the bits situated opposite to the shank, i.e. the tip of the bit, converges towards an axis of the support structure 18, corresponding to the axis of the mount 5. In other words, the surface of the seat 6a is such that the bit 88 is not positioned parallel to the axis X1 of the support device, but instead so that it converges towards the axis XI. Therefore, a first section of the bit 88 close to the chuck 50 is further away from the axis X1 than any section of the bit 88 which is more distant from the chuck 50 than the first section.

All the bits have preferably the same distance from the axis X 1 at the base of the circular crown-piece 6.

Owing to such features it is possible to optimize the space inside the body 80 and house bits 88 of varying length. The bits 88 of varying length are preferably housed alternately inside the multiple seats of the circular crown-piece 6.

The circular crown-piece 6 is fixed onto the body 80 of the support structure 18, preferably screwed by means of screws 1 passing through side surfaces of the body 80 which extend between two guides 10 and engaging inside holes 7 in side surfaces of the circular crown-piece 6 situated between the seats 6a of the circular crown-piece 6.

The support structure 18 also comprises a cover 2 fixed to the base of the body 80. The cover 2 is the seat for the permanent magnet 4, preferably for multiple magnets 4 which are associated with respective bits 88, as shown in Figure 8. Each magnet 4 has a seat 3 in the cover 2, as shown in Figure 8. In the embodiment shown in Fig. 8, the mount 5 is a spindle which engages inside the circular crown-piece 6 and the cover 2 and is held in position by a screw 1 which engages with the spindle 5 and bears against the cover 2. The cover 2 is fixed by means of screws 20 on the circular crown-piece 6.

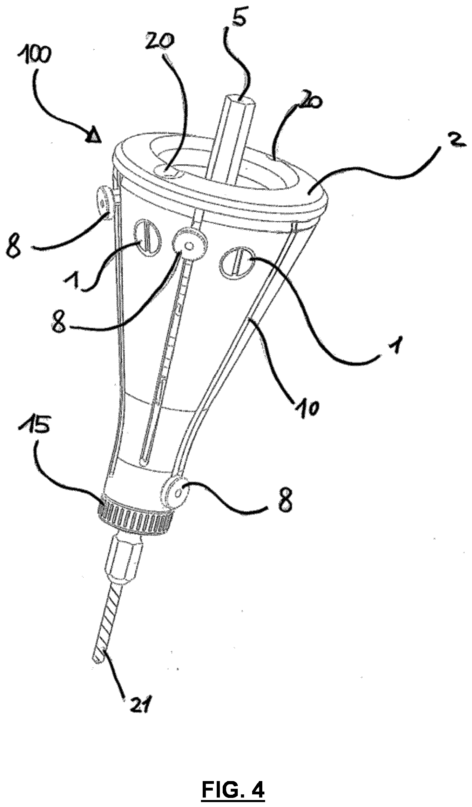

A method for changing the bit supported by a support device according to the present disclosure comprises the steps described below. Firstly, the support device may be in an initial configuration in which a bit, for example a drilling bit with a threaded portion 21, is selectively supported at a distal end of the support, as shown in Figure 4. The distal end is at an end 19a of the device shown in the exploded view of Figure 8. The end 19a may be formed as one piece with the body 80 or can be mounted thereon, as a component of the support structure 18. Two or more holes 19 are formed in a cylindrical peripheral portion of the end 19. Two or more ball bearings 12 are intended to engage partly inside the holes 19, projecting partly into the space inside the end 19a, depending on the position of the flange 15 which is intended to assume two positions. In one position, where a tooth 15a of the flange 15 engages in a seat 13 of the end 19a, the balls partially engage inside the holes 19, projecting partly into the space inside the end 19a and entering into a recess 9 of the bit which is situated at the end 19a. The recess 9 is in the aforementioned position when the slider 8 is at the end of its travel inside the guide 10. O-rings 14, 16 are provided for engagement of the flange 15 with the end 19a. Release of bit 88 is performed by disengagement of the recess 9/balls 12, which is achieved by re-establishing a previous position of the flange 15, with corresponding release of the balls 12 from the holes 19.

Therefore, from the initial configuration where the drilling bit is fixed inside the support device, the operator releases the flange 15, freeing it from the balls 12. At this point, the slider 8 is retracted into the proximal position close to the chuck 50 and together with it the entire bit slides into the retracted position where the magnet 4 retains the bit inside the seat 6a of the circular crown-piece 6.

The positioning of another bit, for example a screwing bit, such as that shown in Figure 5, is performed as follows: the slider 8 associated with the bit is displaced into the distal position at the end 19a of the support device; the flange 15 is rotated again, fixing the bit 88 in position, with the balls 12 engaged inside the recess 9 of the bit.

All the operations are performed by operating the sliders and not the bits. Multiple bits are pre-loaded. Manual operation may be replaced by electrical means. The operator's work is greatly simplified and speeded up, especially when it is required to work in tight and cramped spaces where there is no room for the operator to bring the machine tool case.

## Claims

1. Support device for a bit of a machine tool of the type comprising a chuck (50),
**characterized in that** it comprises a loader/selector (100) for loading/ selecting bits (88) for the machine tool, the device (100) comprising:
- a support structure (18) comprising:
• a mount (5) integral with the support structure (18) and intended to be gripped by the chuck (50) in a proximal position close to the chuck (50);
• at least one proximal seat (6a) for at least one bit (88) for supporting the at least one bit in a position retracted inside the support structure (18);
• a distal seat (17) for another bit (88) in a distal position spaced from the chuck (50) for supporting the other bit with a working surface projecting from the support structure (18);
• selection means designed to displace the at least one bit (88) from the proximal seat (6a) to the distal seat (17) and the other bit from the distal seat (17) to the proximal seat (6a).

2. Device according to claim 1, **characterized in that** said selection means switch over the positions of the at least one bit (88) and the other bit (88), respectively, from the distal seat (17) to the proximal seat (6a) and from the proximal seat (6a) to the distal seat (17).

3. Device according to claim 1, **characterized in that** said proximal seat (6a) supports only one bit (88).

4. Device according to claim 1, **characterized in that** it comprises multiple proximal seats (6a) for multiple bits (88) in positions retracted inside the support structure (18).

5. Device according to claim 4, **characterized in that** said selection means (8) selectively displace said other bit (88) from the distal seat (17) to the proximal seat (6a) and one of said multiple bits (88) from the proximal position (6a) to the distal position (17).

6. Device according to claim 4 or 5, **characterized in that** said multiple proximal seats (6a) are arranged in a circular crown-piece (6) of the support structure (18) situated in the proximal position close to the chuck (50).

7. Device according to claim 6, **characterized in that** the support structure (18) comprises a body (80), the body (80) covers the circular crown-piece (6) and extends tapering towards the distal seat (17), the body (80) comprises multiple guides (10), each guide (10) extending from the circular crown-piece (6) towards the distal seat (17) so as to guide one of said multiple bits or said other bit, respectively from the proximal seat (6a) to the distal seat (17) and vice versa.

8. Device according to claim 7, **characterized in that** it comprises multiple bits (88) inserted in multiple seats (6a) of the circular crown-piece (6), each of said bits (88) comprises a slider (8) sliding in a guide (10) of the body (8) of the support structure (18), said slider (8) comprises a metallic part and said circular crown-piece (6) is associated with a permanent magnet (4) which retains the multiple bits (88) in the multiple seats (6a).

9. Device according to claim 1, **characterized in that** said support structure (18) comprises releasable fixing means for locking a mounting portion of said other bit (88) in said distal position spaced from the chuck (50).

10. Device according to claim 1, **characterized in that** said mount (5) of the support structure (18) is a hexagonal shank.

11. Device according to claim 8, **characterized in that** said multiple bits (88) comprise a preferably hexagonal shank and have two different lengths, preferably cutting ends with one length and tool mounting ends with a length smaller than the cutting ends, each of said seats for the multiple bits (88) comprises a surface supporting at least part of the shank, the surface extends from a proximal side to a distal side of the circular crown-piece (6), converging towards the centre of the distal side so that the part of the bits situated opposite to the shank, i.e. tip, converges towards an axis of the support structure (18), corresponding to the axis of the mount (5).

12. Device according to claim 11, **characterized in that** the bits (88) of varying length are housed alternately in the multiple seats of the circular crown-piece (6).

13. Device according to claim 11, **characterized in that** a width of the multiple seats in the proximal part of the circular crown-piece (6) corresponds to a thickness of the shank.

14. Device according to claim 7, **characterized in that** the circular crown-piece (6) is fixed onto the body (80) of the support structure (18), preferably screwed by means of screws passing through side surfaces of the body (80) which extend between two guides (10) and engaging inside holes in side surfaces of the circular crown-piece (6) situated between the seats of the circular crown-piece (6).

15. Device according to claim 8, **characterized in that** the support structure (18) comprises a cover (2) fixed to a base of the body (80), the cover housing the permanent magnet (4), preferably multiple magnets (4) associated with respective bits.

## Amended claims

### Amended claims in accordance with Rule 137(2) EPC.

1. Support device for a bit of a machine tool of the type comprising a chuck (50),
comprising a loader/selector (100) for loading/selecting bits (88) for the machine tool, the device (100) comprising:
- a support structure (18) comprising:
• a mount (5) integral with the support structure (18) and intended to be gripped by the chuck (50) in a proximal position close to the chuck (50);
• at least one proximal seat (6a) for at least one bit (88) for supporting the at least one bit in a position retracted inside the support structure (18);
• a distal seat (17) for another bit (88) in a distal position spaced from the chuck (50) for supporting the other bit with a working surface projecting from the support structure (18);
• selection means designed to displace the at least one bit (88) from the proximal seat (6a) to the distal seat (17) and the other bit from the distal seat (17) to the proximal seat (6a),
**characterized in that**
the distal seat is at an end (19a) of the device, wherein the end (19a) of the device includes a cylindrical peripheral portion and two or more holes (19) in the cylindrical peripheral portion;
two or more ball bearings (12), corresponding to said two or more holes (19), are provided to engage partly inside said holes (19) and to enter into a recess (9) of the other bit at the distal seat (17),
said two or more ball bearings (12) are retained in the recess (9) by the flange (15) at a first position of the flange (15) on the end (19a) or released from the recess (9) at a second position of the flange (15), wherein
multiple proximal seats (6a) for multiple bits (88) are provided in positions retracted inside the support structure (18), the multiple proximal seats (6a) are arranged in a circular crown-piece (6) of the support structure (18),
the support structure (18) comprising a body (80), the body (80) covers the circular crown-piece (6) and extends tapering towards the distal seat (17), the body (80) comprises multiple guides (10), each guide (10) extending from the circular crown-piece (6) towards the distal seat (17) to guide one of said multiple bits or said other bit, respectively from the proximal seat (6a) to the distal seat (17) and vice versa.,
wherein multiple bits (88) are inserted in multiple seats (6a) of the circular crown-piece (6), each of said bits (88) comprises a slider (8) sliding in a guide (10) of the body (8) of the support structure (18),
each of the multiple bits (88) comprises a shank, each of said multiple proximal seats (6a) for the multiple bits (88) comprises a surface supporting at least part of the shank, the surface extends from a proximal side to a distal side of the circular crown-piece (6), converging towards the centre of the distal side so that a tip of the bits converges towards an axis of the support structure (18), corresponding to the axis of the mount (5).

2. Device according to claim 1, **characterized in that** said selection means switch over the positions of the at least one bit (88) and the other bit (88), respectively, from the distal seat (17) to the proximal seat (6a) and from the proximal seat (6a) to the distal seat (17).

3. Device according to claim 1, **characterized in that** said proximal seat (6a) supports only one bit (88).

4. Device according to claim 3, **characterized in that** said selection means (8) selectively displace said other bit (88) from the distal seat (17) to the proximal seat (6a) and one of said multiple bits (88) from the proximal position (6a) to the distal position (17).

5. Device according to claim 4, **characterized in that** said slider (8) comprises a metallic part and said circular crown-piece (6) is associated with a permanent magnet (4) which retains the multiple bits (88) in the multiple seats (6a).

6. Device according to claim 1, **characterized in that** said mount (5) of the support structure (18) is a hexagonal shank.

7. Device according to claim 5, **characterized in that** said multiple bits (88) have a hexagonal shank and have two different lengths, cutting ends with one length and tool mounting ends with a length smaller than the cutting ends.

8. Device according to claim 7, **characterized in that** the bits (88) of varying length are housed alternately in the multiple seats of the circular crown-piece (6).

9. Device according to claim 8, **characterized in that** a width of the multiple seats in the proximal part of the circular crown-piece (6) corresponds to a thickness of the shank.

10. Device according to claim 1, **characterized in that** the circular crown-piece (6) is fixed onto the body (80) of the support structure (18), preferably screwed by means of screws passing through side surfaces of the body (80) which extend between two guides (10) and engaging inside holes in side surfaces of the circular crown-piece (6) situated between the seats of the circular crown-piece (6).

11. Device according to claim 5, **characterized in that** the support structure (18) comprises a cover (2) fixed to a base of the body (80), the cover housing the permanent magnet (4), preferably multiple magnets (4) associated with respective bits.
